# EUROPÄISCHE PATENTSCHRIFT

(11) **EP 3 613 634 B1**
(45) Veröffentlichungstag und Bekanntmachung des Hinweises auf die Patenterteilung: **17.11.2021**
(21) Anmeldenummer: 18190685.0
(22) Anmeldetag: 24.08.2018
(51) Int. Cl.: B60P 3/08, B66F 7/08

(54) **HEBEVORRICHTUNG**
LIFTING DEVICE
DISPOSITIF DE LEVAGE

(43) Veröffentlichungstag der Anmeldung: 26.02.2020
(73) Patentinhaber: Kässbohrer Transport Technik GmbH, 5301 Eugendorf (AT)
(72) Erfinder: EBERHARTINGER, Alexander, 5300 Hallwang (AT)
(74) Vertreter: Torggler & Hofinger Patentanwälte

(56) Entgegenhaltungen:
- WO-A1-2009/084063
- DE-T2- 69 207 817
- FR-A1- 2 665 430

## Beschreibung

Die Erfindung betrifft eine Hebevorrichtung für eine Fahrbahn eines Fahrzeugtransporters mit den Merkmalen des Oberbegriffs des Anspruchs 1 und einen Fahrzeugtransporter mit wenigstens einer solchen Hebevorrichtung.

Eine gattungsgemäße Hebevorrichtung für eine Fahrbahn eines Fahrzeugtransporters und ein Fahrzeugtransporter mit einer solchen Hebevorrichtung gehen aus DE 692 07 817 T2 hervor.

Die Hebevorrichtung weist einen an einem ersten Schwenklager schwenkbar gelagerten ersten Schwenkarm auf, an welchem ein zweiter Schwenkarm schwenkbar angelenkt ist, wobei der zweite Schwenkarm über ein zweites Schwenklager (welches vom Anlenkpunkt des zweiten Schwenkarms am ersten Schwenkarm gesondert ausgebildet und beabstandet ist) schwenkbar gelagert ist und wobei ein Abstand zwischen dem ersten Schwenklager des ersten Schwenkarms und dem zweiten Schwenklager des zweiten Schwenkarms durch ein Verschwenken des zweiten Schwenkarms veränderbar ist und wobei im ersten Schwenkarm zumindest ein Ausleger teleskopisch gelagert ist, an welchem die Fahrbahn befestigbar ist, wobei ein Verstellmechanismus zum Ein- und Ausfahren des zumindest einen Auslegers vorgesehen ist, welcher automatisch über ein Hebelwerk durch die Schwenkbewegung betätigt wird, sodass ein Ausfahren des Auslegers während der Schwenkbewegung erfolgt.

Aufgabe der Erfindung ist die Bereitstellung einer gattungsgemäßen Hebevorrichtung, bei welcher während der Schwenkbewegung des ersten Schwenkarms ein geringer Raumbedarf besteht und bevorzugt ein geringeres Drehmoment zum Hochheben der Fahrbahn erforderlich ist und die Bereitstellung eines Fahrzeugtransporters mit wenigstens einer solchen Hebevorrichtung.

Diese Aufgabe wird durch eine Hebevorrichtung mit den Merkmalen des Anspruchs 1 und einen Fahrzeugtransporter mit wenigstens einer solchen Hebevorrichtung gelöst. Vorteilhafte Ausführungsformen der Erfindung sind in den abhängigen Ansprüchen definiert.

Weil erfindungsgemäß vorgesehen ist, dass der Verstellmechanismus für den zumindest einen Ausleger in Form eines mit dem zumindest einen ersten Schwenkarm verbundenen, unabhängig von einer Schwenkstellung des zumindest einen ersten Schwenkarms betätigbaren Linearaktuators ausgebildet ist, kann ein maximal raumsparendes Verschwenken des zumindest einen ersten Schwenkarms erfolgen, wobei der teleskopisch gelagerte Ausleger eingefahren bleiben kann und ein Ausfahren des teleskopisch gelagerten Auslegers durch den Verstellmechanismus erst nach Erreichen der Endstellung des Verschwenkens erfolgen kann (grundsätzlich kann aufgrund der Unabhängigkeit natürlich in jeder Schwenkstellung ein Aus- oder Einfahren erfolgen).

Außerdem genügt es, für eine gegebene Hubhöhe der Fahrbahn den zumindest einen ersten Schwenkarm kürzer auszuführen, als beim eingangs diskutierten Stand der Technik, was den Vorteil mit sich bringt, dass während des Verschwenkens zwischen dem ersten Schwenklager des zumindest einen ersten Schwenkarms und dem Ende des Auslegers, an welchem die Fahrbahn gelagert ist, ein kürzerer Hebelarm besteht, wodurch sich beim Hochheben der Fahrbahn ein geringeres erforderliches Drehmoment zum Antreiben der Schwenkbewegung und beim Absenken der Fahrbahn ein geringeres Drehmoment zum kontrollierten Absenken ergibt. Es genügt ein kleiner dimensionierter Antrieb für die Schwenkbewegung und der zumindest einen erste und/oder der zweite Schwenkarm kann kürzer ausgebildet sein. Durch die kleiner dimensionierte Hebevorrichtung ergibt sich auch eine geringere Störkontur derselben, was sich beispielsweise darin äußern kann, dass für auf einer Fahrbahn eines Fahrzeugtransporters benachbart zur Hebevorrichtung abgestellte Fahrzeuge seitlich mehr Platz (etwa zum Öffnen der Fahrzeugtüren) zur Verfügung steht.

Die Längsbewegung der Fahrbahn während des Verschwenkens und damit der hierfür benötigte Raumbedarf sind aufgrund der Möglichkeit, erst nach Beendigung des Schwenkvorganges den teleskopisch gelagerten Ausleger auszufahren, sehr gering.

Eine Veränderung des Abstands zwischen dem ersten Schwenklager des ersten Schwenkarms und dem zweiten Schwenklager des zweiten Schwenkarms durch ein Verschwenken des zweiten Schwenkarms kann beispielsweise über eine Führung, speziell über eine transversal zur Schwenkachse verlaufende Führung (bevorzugt eine Linearführung in Form einer Kulisse), erfolgen.

Bevorzugt ist bei einem erfindungsgemäßen Fahrzeugtransporter vorgesehen, dass an beiden Längsseiten des Fahrzeugtransporters je eine solche Hebevorrichtung angeordnet ist. Alternativ könnte auch nur eine einzige solche Hebevorrichtung für den Fahrzeugtransporter vorgesehen sein.

Bei einem Ausführungsbeispiel der Erfindung ist ein Schwenkmechanismus zum Verschwenken des zweiten Schwenkarms vorgesehen. Alternativ könnte eine Kraftausübung auf den ersten Schwenkarm erfolgen (z. B. auf ein, ggf. in einer Kulisse bewegbar angeordnetes, erstes Schwenklager), sodass der zweite Schwenkarm nur als Führung oder Stütze für den ersten Schwenkarm dient und diesen nicht antreibt.

Bevorzugt ist eine Steuer- oder Regelvorrichtung zum Steuern oder Regeln des Verstellmechanismus und des Schwenkmechanismus vorgesehen, wobei die Steuer- oder Regelvorrichtung dazu ausgebildet ist, ausgehend von einer Schwenkstellung des zweiten Schwenkarms, in welcher der Abstand zwischen dem ersten Schwenklager des zumindest einen ersten Schwenkarms und dem zweiten Schwenklager des zweiten Schwenkarms einen ersten Wert aufweist, zuerst den Schwenkmechanismus zu betätigen, bis ein vorgegebener zweiter Wert erreicht ist, welcher kleiner als der erste Wert ist und erst dann, ohne weitere Betätigung des Schwenkmechanismus den Verstellmechanismus zu betätigen, um den Ausleger relativ zum ersten Schwenkarm mittels des Linearaktuators auszufahren. Der zweite Wert kann ein minimaler Wert des Abstands zwischen dem ersten Schwenklager des zumindest einen ersten Schwenkarms und dem zweiten Schwenklager des zweiten Schwenkarms sein. Natürlich kann aber vorgesehen sein, bereits vor Erreichen des zweiten Werts (noch vor Beendigung des Schwenkvorgangs) mit dem Ausfahren des Auslegers zu beginnen, wenn dies ladetechnisch vorteilhaft erscheint. Z. B. könnte vor Beginn des Schwenkvorgangs ein teilweises Ausfahren des Auslegers erfolgen, etwa um eine gewünschte Längsverschiebung der Fahrbahn zu bewirken.

Bei einem Ausführungsbeispiel der Erfindung ist vorgesehen, dass der Linearaktuator an einer Außenseite des zumindest einen ersten Schwenkarms angeordnet ist. Alternativ könnte er an einer Innenseite des zumindest einen ersten Schwenkarms angeordnet sein, was aber eine Verwendung im Querschnitt größerer erster Schwenkarme notwendig macht.

Bei einem Ausführungsbeispiel der Erfindung ist vorgesehen, dass der Linearaktuator in Form einer Kolben-Zylinder-Einheit, eines Zahnstangenantriebs, eines Kettenantriebs oder eines Spindeltriebs ausgebildet ist.

Bei einem Ausführungsbeispiel der Erfindung ist vorgesehen, dass der Ausleger eine konkave Ausnehmung oder Form aufweist, in welche der Linearaktuator mit einem Ende hineinragt. Dies ermöglicht eine tiefere Position der Fahrbahn beim ersten Wert des Abstands zwischen dem ersten Schwenklager des ersten Schwenkarms und dem zweiten Schwenklager des zweiten Schwenkarms.

Bei einem Ausführungsbeispiel der Erfindung ist vorgesehen, dass der Ausleger über einen Zwischenhebel mit der Fahrbahn verbindbar ist. Durch die Wahl der Abmessungen des Zwischenhebels lässt sich beispielsweise im abgesenkten Zustand die Neigung der Fahrbahn beeinflussen.

Bei einem Ausführungsbeispiel der Erfindung ist vorgesehen, dass der Zwischenhebel eine konkave Ausnehmung oder Form aufweist, in welche der Linearaktuator in zumindest einem Teilbereich des Schwenkbereichs, speziell in einem abgesenkten Zustand der Fahrbahn, mit einem Ende hineinragt.

Ausführungsbeispiele der Erfindung werden anhand der Figuren diskutiert. Es zeigen:

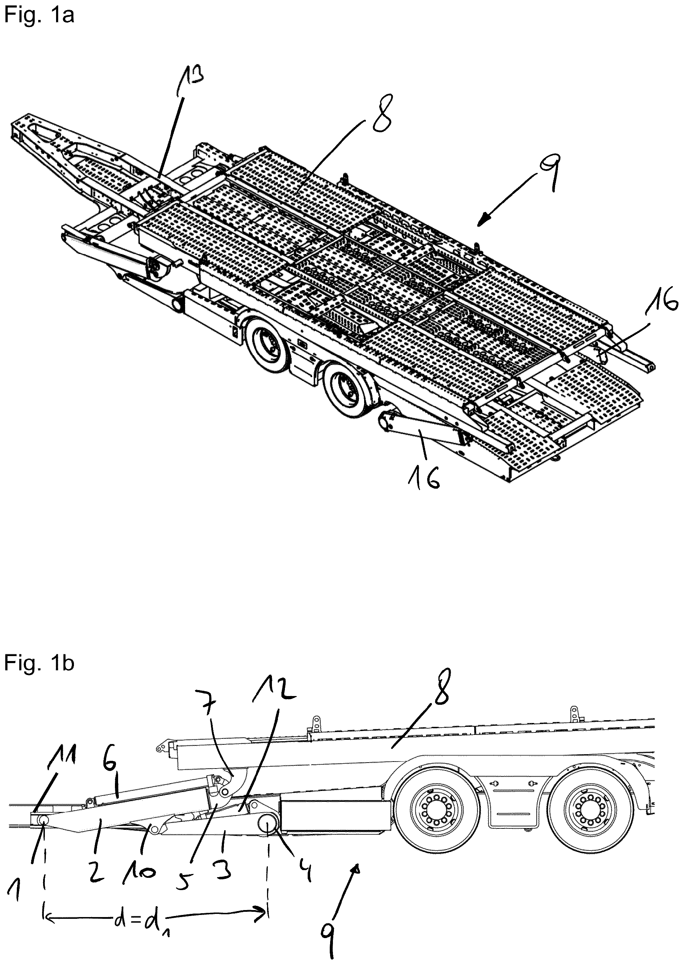

- Fig. 1a: einen Fahrzeugtransporter mit einer erfindungsgemäßen Hebevorrichtung in einer ersten Stellung
- Fig. 1b: eine seitliche Detailansicht zur Fig. 1a
- Fig. 1 c-f: verschiedene Ansichten zur erfindungsgemäßen Hebevorrichtung der Fig. 1a und 1b
- Fig. 2a: einen Fahrzeugtransporter mit einer erfindungsgemäßen Hebevorrichtung in einer zweiten Stellung
- Fig. 2b: eine seitliche Detailansicht zur Fig. 2a
- Fig. 2c-f: verschiedene Ansichten zur erfindungsgemäßen Hebevorrichtung der Fig. 2a und 2b
- Fig. 3a: einen Fahrzeugtransporter mit einer erfindungsgemäßen Hebevorrichtung in einer dritten Stellung
- Fig. 3b: eine seitliche Detailansicht zur Fig. 3a
- Fig. 3c-f: verschiedene Ansichten zur erfindungsgemäßen Hebevorrichtung der Fig. 3a und 3b
- Fig. 4a-c: verschiedene alternative Vorrichtungen zum Verändern des Abstands zwischen dem ersten Schwenklager des ersten Schwenkarms

Fig. 1a zeigt eine isometrische Ansicht eines Fahrzeugtransporters 9 mit einer erfindungsgemäßen Hebevorrichtung in einer ersten Stellung, in welcher sich die Fahrbahn 8 relativ zu einem Fahrgestell 13 des Fahrzeugtransporters 9 in ihrer niedrigsten Stellung befindet. In dieser Stellung kann ggf. unter Verwendung einer Auffahrhilfe wie einer Auffahrrampe ein Auffahren eines Fahrzeugs oder mehrerer Fahrzeuge auf die Fahrbahn 8 erfolgen. Eine Neigung der Fahrbahn 8 in der gezeigten ersten Stellung kann unter anderem über den Zwischenhebel 7 beeinflusst werden (siehe dazu Figur 1b).

An jenem Ende des Fahrzeugtransporters 9, welches benachbart zu einer Deichsel des Fahrzeugtransporters 9 angeordnet ist, sind an beiden Seiten des Fahrzeugtransporters 9 angeordnet:
- ein erster Schwenkarm 2, welcher an einem ersten, an einem Fahrgestell 13 des Fahrzeugtransporters 9 angeordneten, Schwenklager 1 schwenkbar gelagert ist
- eine Kulisse 11, in welcher das Schwenklager 1 bewegbar gelagert ist
- ein am ersten Schwenkarm 2 über eine Anlenkung 10 schwenkbar angelenkter zweiter Schwenkarm 3, welcher an einem zweiten, an einem Fahrgestell 13 des Fahrzeugtransporters 9 angeordneten, Schwenklager 4 schwenkbar gelagert ist,
- ein teleskopisch im ersten Schwenkarm 2 gelagerter Ausleger 5, an welchem über einen optionalen Zwischenhebel 7 die Fahrbahn 8 gelenkig befestigt ist
- ein Verstellmechanismus für den Ausleger 5 in Form eines Linearaktuators 6

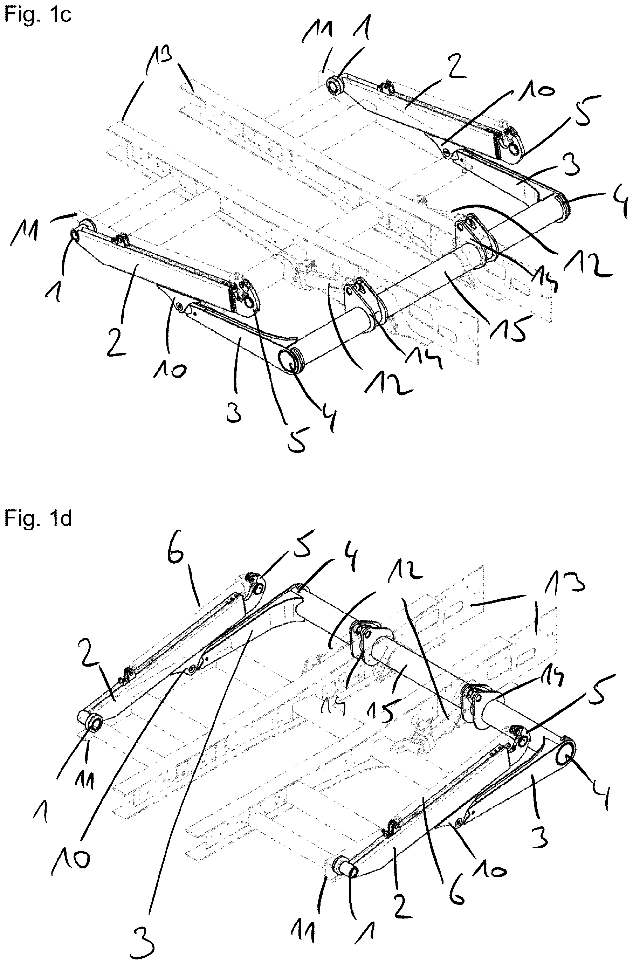

Die zweiten Schwenklager 4 der an den unterschiedlichen Längsseiten des Fahrzeugtransporters 9 angeordneten zweiten Schwenkarme 3 sind durch eine erste Welle 15 miteinander verbunden (vgl. Fig. 1c).

Diese erste Welle 15 ist Teil eines Schwenkmechanismus zum synchronen Verschwenken beider zweiter Schwenkarme 3. Der Schwenkmechanismus umfasst des Weiteren zwei drehfest an der ersten Welle 15 angeordnete Exzenter 14, an welchen jeweils ein hier als Kolben-Zylinder-Einheit ausgebildeter Antrieb 12 angreift.

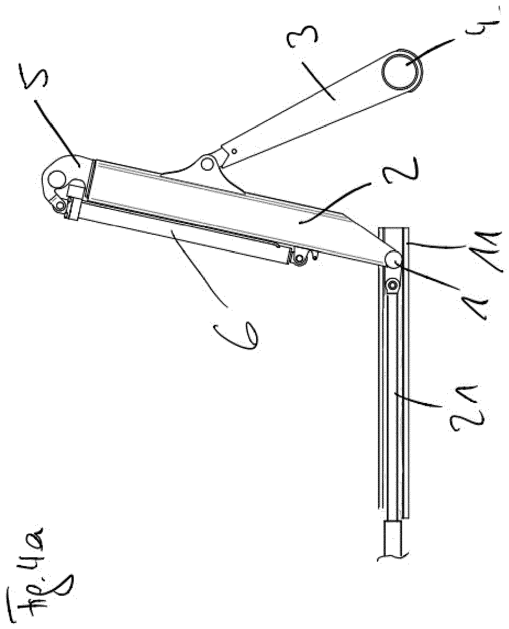

Anders als in Fig. 1c dargestellt, könnten auch nur ein einziger Exzenter 14 und ein einziger Antrieb 12 vorgesehen sein oder es könnten ohne Verwendung einer gemeinsamen ersten Welle 15 die Antriebe 12 unmittelbar an den zweiten Schwenkarmen 3 angreifen (in diesem Fall kann anstelle der mechanischen Synchronisation über die erste Welle 15 eine elektronische Synchronisation durch eine Steuer- oder Regelvorrichtung der Hebevorrichtung erfolgen, vgl. Fig. 4a-c).

Über die Anlenkung 10 erfolgt bei einem Verschwenken des zweiten Schwenkarms 3 eine Kraftausübung auf den ersten Schwenkarm 2. Da das erste Schwenklager 1 in der Kulisse 11 bewegbar gelagert ist, führt diese Kraftausübung dazu, dass sich der Abstand d zwischen dem ersten Schwenklager 1 und dem zweiten Schwenklager 4 ausgehend von einem maximalen ersten Wert d₁ (vgl. Fig. 1b) verringert und sich dadurch die Neigung des ersten Schwenkarms 2 in Bezug auf das Fahrgestell 13 vergrößert. Dies führt dazu, dass das mit dem ersten Schwenkarm 2 verbundene Ende der Fahrbahn 8 angehoben wird. Ein Anheben der Fahrbahn 8 kann also ähnlich einem Scherenhubsystem erfolgen.

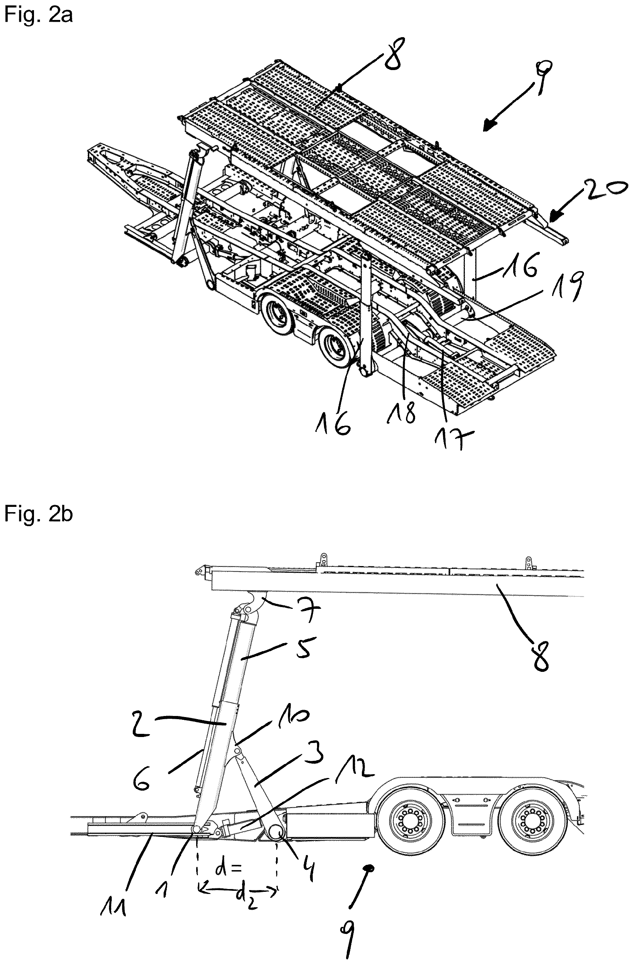

An jenem Ende des Fahrzeugtransporters 9, welches fern der Deichsel des Fahrzeugtransporters 9 angeordnet ist, ist an beiden Seiten des Fahrzeugtransporters 9 ein schwenkbarer Teleskoparm 16 angeordnet. Die beiden schwenkbaren Teleskoparme 16 sind durch eine zweite Welle 19 miteinander verbunden, welche über einen Exzenter 18 und einen hier als Kolben-Zylinder-Einheit ausgebildeten Antrieb 17 verschwenkbar sind (vgl. Fig. 2a).

Anders als dargestellt, könnten auch zwei Exzenter 18 und Antriebe 17 vorgesehen sein, die entweder an der zweiten Welle 19 angreifen oder unmittelbar an den schwenkbaren Teleskoparmen 16 angreifen (in diesem Fall kann anstelle der mechanischen Synchronisation über die zweite Welle 19 eine elektronische Synchronisation durch eine Steuer- oder Regelvorrichtung der Hebevorrichtung erfolgen).

Die beiden schwenkbaren Teleskoparme 16 dienen dazu, synchron mit der Schwenkbewegung der ersten und zweiten Schwenkarme 2, 3 eine Hubbewegung auf das mit ihnen verbundene Ende der Fahrbahn 8 auszuüben, wenn die Fahrbahn 8 zumindest im Wesentlichen in einer horizontalen Ausrichtung angehoben (und abgesenkt) werden soll. Andernfalls ist keine Synchronisation der beiden schwenkbaren Teleskoparme 16 und der Schwenkbewegung der ersten und zweiten Schwenkarme 2, 3 erforderlich.

Die Fahrbahn 8 ist über Loslager 20, welche einen Längsversatz der Fahrbahn 8 gegenüber den schwenkbaren Teleskoparmen 16 erlauben, an den schwenkbaren Teleskoparmen 16 gelagert. Alternativ könnte statt der schwenkbaren Teleskoparme 16 dasselbe System eingesetzt werden, wie an jenem Ende des Fahrzeugtransporters 9, welches benachbart zu einer Deichsel des Fahrzeugtransporters 9 angeordnet ist.

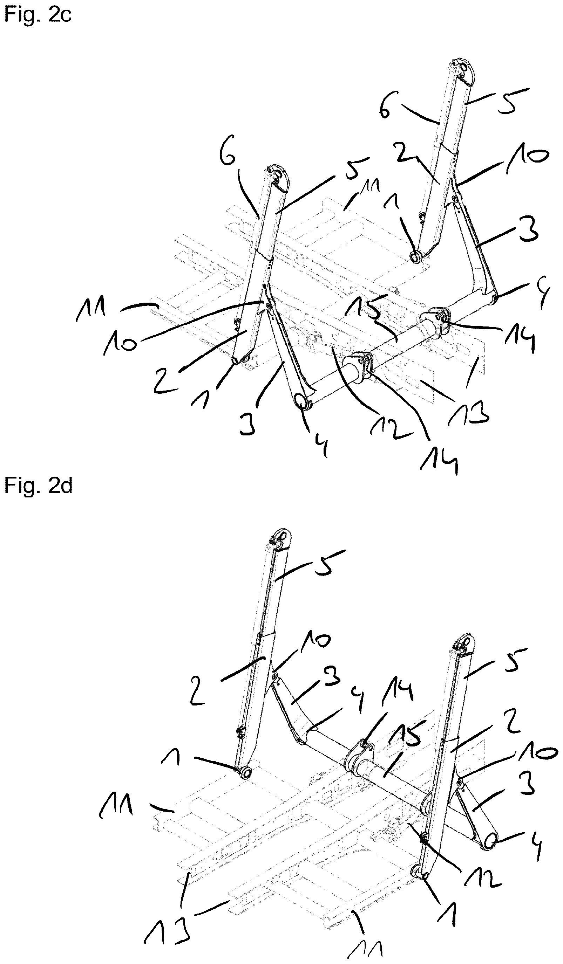

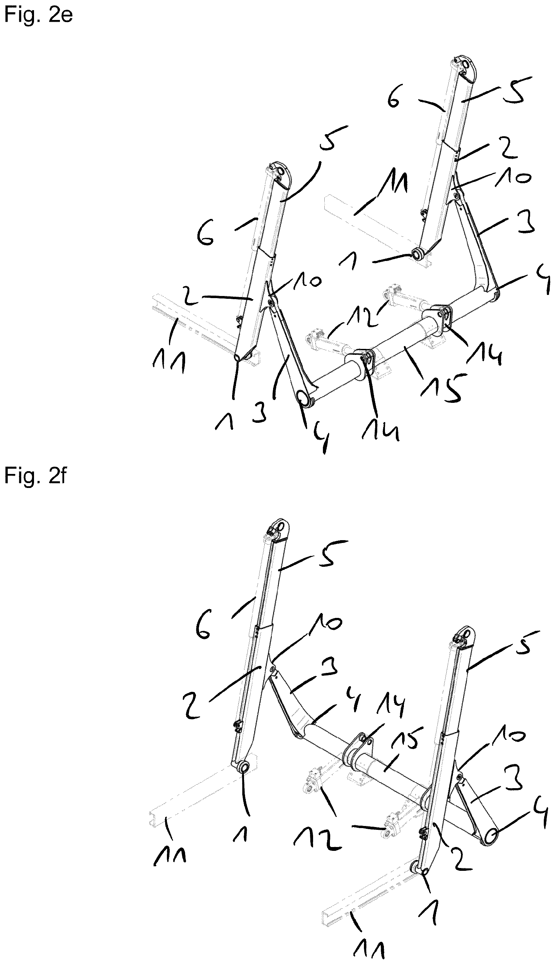

Die Fig. 2 zeigt die Hebevorrichtung in einer zweiten Stellung, in welcher sich die Fahrbahn 8 relativ zum Fahrgestell 13 des Fahrzeugtransporters 9 in ihrer höchsten Stellung befindet. Die Ausleger 5 sind maximal aus den ersten Schwenkarmen 2 ausgefahren. Der Abstand d (vgl. Fig. 2b) zwischen dem ersten und dem zweiten Schwenklager 1, 4 ist minimal und weist einen zweiten Wert d₂ auf. In dieser Stellung ist eine maximale Durchfahrhöhe der unteren Fahrbahn für den Be- oder Entladevorgang erreicht.

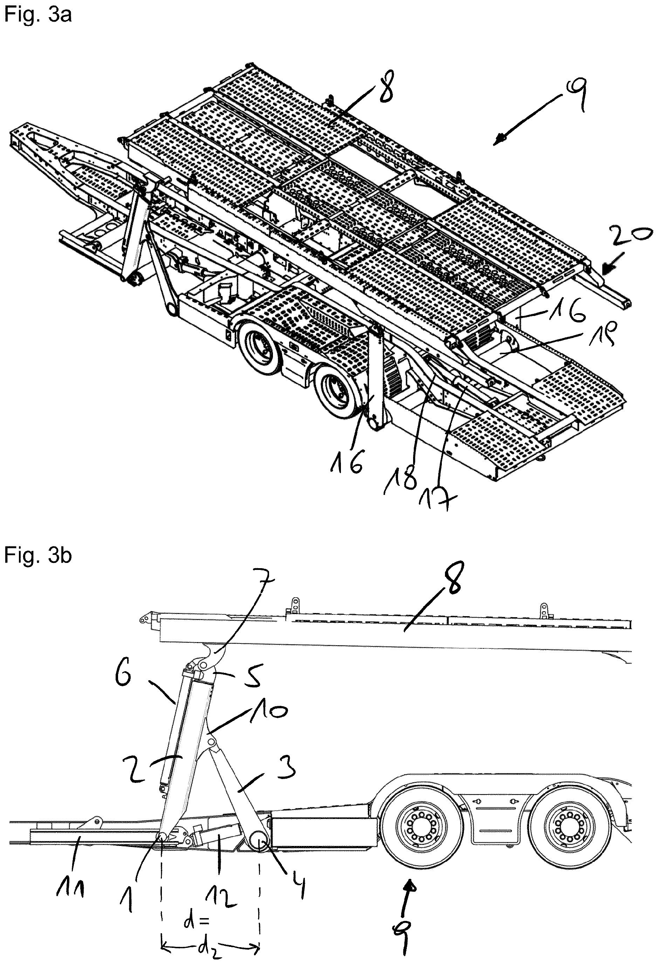

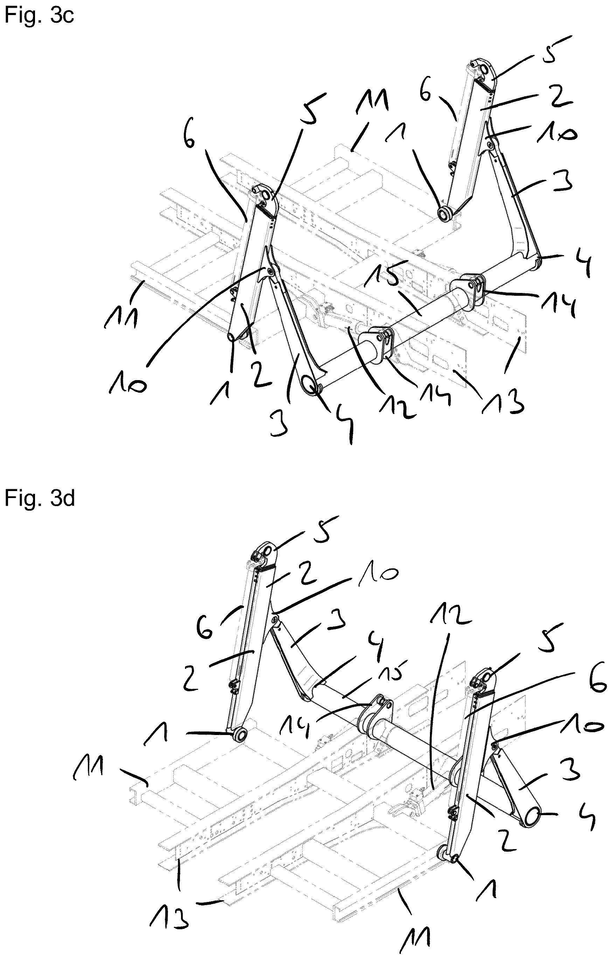

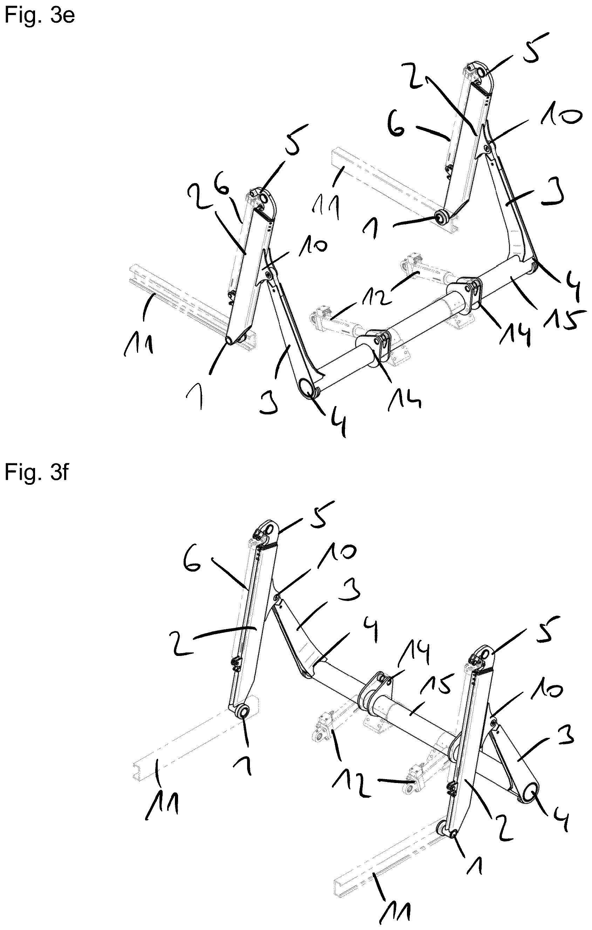

Die Fig. 3 zeigt die Hebevorrichtung in einer dritten Stellung, in welcher sich die Fahrbahn 8 relativ zum Fahrgestell 13 des Fahrzeugtransporters 9 in einer Zwischenstellung befindet, und zwar in jener Stellung, in welcher die Schwenkbewegung der ersten und zweiten Schwenkarme 2, 3 beendet ist und in welcher das Ausfahren des Auslegers 5 erfolgen kann. In dieser Stellung weist der Abstand d (vgl. Fig. 3b) zwischen dem ersten und dem zweiten Schwenklager 1, 4 den zweiten Wert d₂ auf. Angemerkt sei, dass nicht unbedingt ein vollständiges Ein- oder Ausfahren des Auslegers 5 (bis zum konstruktiv minimal oder maximal möglichen Wert) erfolgen muss.

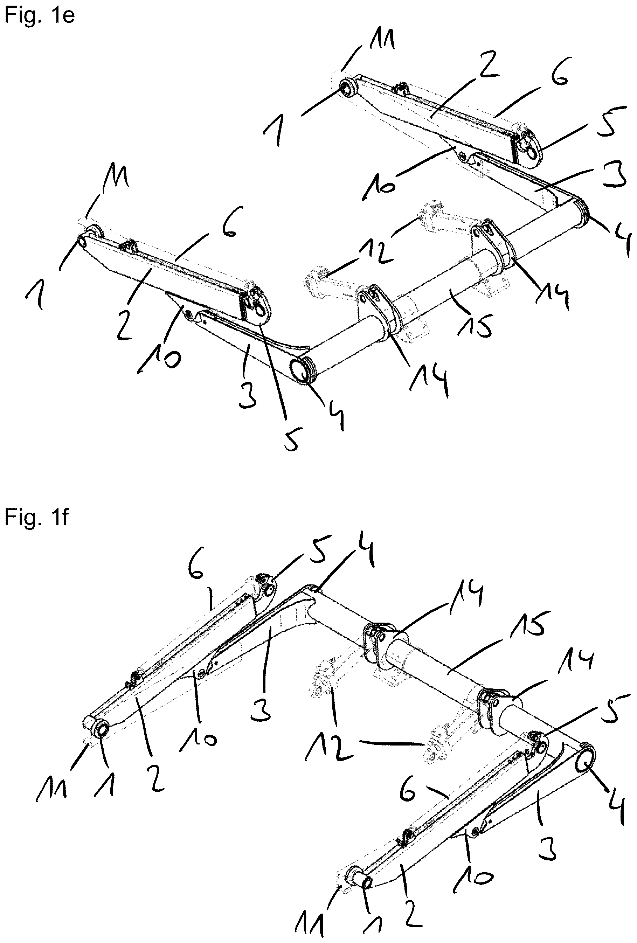

Natürlich ist auch jede beliebige Zwischenstellung des Auslegers 5 zwischen den in den Fig. 1 bis 3 gezeigten Stellungen möglich.

Zur Durchführung des Hebe- und Senkvorganges kann eine Steuer- oder Regelvorrichtung zum Steuern oder Regeln des Verstellmechanismus und des Schwenkmechanismus vorgesehen sein, welche dazu ausgebildet ist, ausgehend von einer Schwenkstellung des zweiten Schwenkarms 3, in welcher der Abstand d zwischen dem ersten Schwenklager 1 des zumindest einen ersten Schwenkarms 2 und dem zweiten Schwenklager 4 des zweiten Schwenkarms 3 einen ersten Wert d₁ aufweist (Stellung der Fig. 1), zuerst den Schwenkmechanismus zu betätigen, bis ein vorgegebener zweiter Wert d₂ erreicht ist, welcher kleiner als der erste Wert d₁ ist (Stellung der Fig. 3) und erst dann, ohne weitere Betätigung des Schwenkmechanismus den Verstellmechanismus zu betätigen, um den Ausleger 5 relativ zum ersten Schwenkarm 2 mittels des Linearaktuators 6 auszufahren bis die Stellung der Fig. 2 erreicht ist. Der Senkvorgang kann in umgekehrter Weise erfolgen.

Fig. 4a zeigt eine Seitenansicht eines alternativen Antriebs für den ersten Schwenkarm 2, welcher beim Ausführungsbeispiel der Fig. 1 - 3 eingesetzt werden kann. Hier wird der erste Schwenkarm 2 unmittelbar über einen Antrieb 21 (hier eine in oder an der Kulisse 11 angeordneten Kolben-Zylinder-Einheit, es ist jedoch auch ein Antrieb über einen Spindeltrieb denkbar) angetrieben.

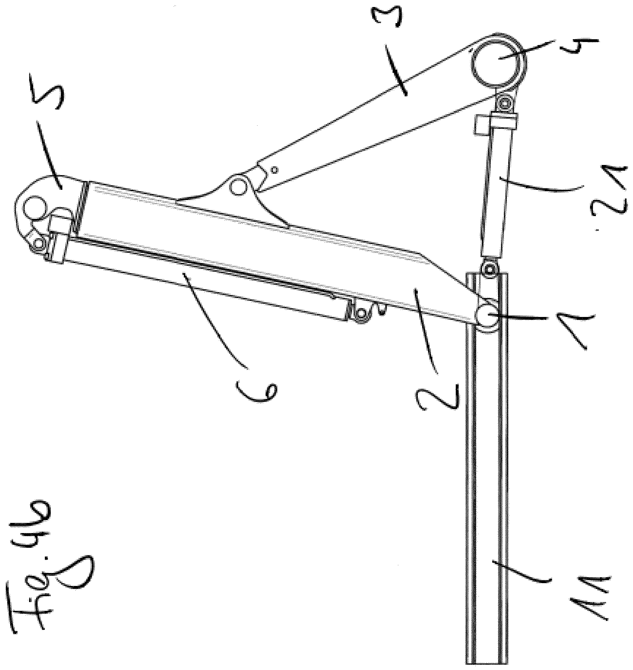

Fig. 4b zeigt eine weitere Seitenansicht eines alternativen Antriebs für den ersten Schwenkarm 2, welcher beim Ausführungsbeispiel der Fig. 1 - 3 eingesetzt werden kann. Hier wird ebenfalls der erste Schwenkarm 2 unmittelbar über einen Antrieb 21 (hier eine zwischen dem ersten und dem zweiten Schwenklager 1, 4 angeordnete Kolben-Zylinder-Einheit) angetrieben.

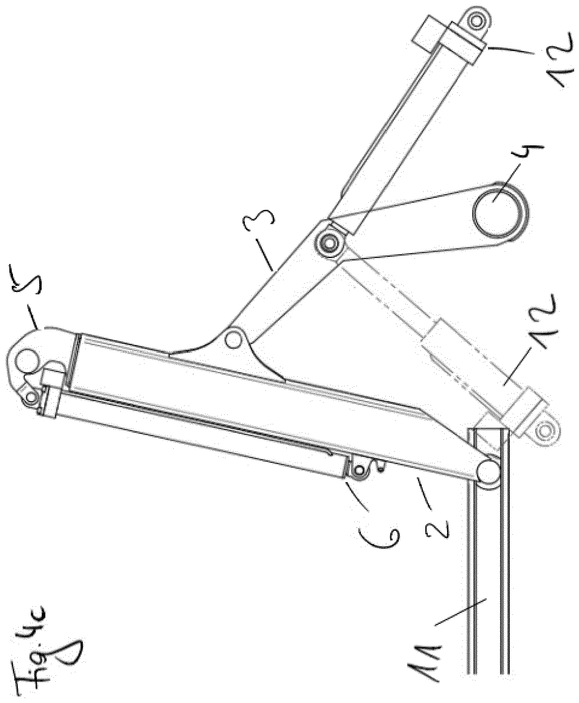

Fig. 4c zeigt eine Seitenansicht eines alternativen Antriebs 12 des Schwenkmechanismus für den zweiten Schwenkarm 3 (hier als am zweiten Schwenkarm 3 angreifende Kolben-Zylinder-Einheit ausgebildet). Der zweite Schwenkarm 3 weist in der hier gezeigten Ausführung einen von einem geradlinigen Verlauf abweichenden, geknickten Verlauf auf. Der direkt an den zweiten Schwenkarm 3 angreifende Antrieb 12 kann (alternativ oder gegebenenfalls auch in Kombination) auf der von der Kulisse 11 abgewandten Seite des zweiten Schwenklagers 4 (mit durchgezogenen Linien dargestellter Antrieb 12) oder auf der der Kulisse 11 zugewandten Seite des zweiten Schwenklagers 4 (strichpunktiert dargestellter Antrieb 12) angeordnet sein.

### Bezugszeichenliste:

- 1: erstes Schwenklager
- 2: erster Schwenkarm
- 3: zweiter Schwenkarm
- 4: zweites Schwenklager
- 5: teleskopisch gelagerter Ausleger
- 6: Linearaktuator des Verstellmechanismus
- 7: Zwischenhebel
- 8: Fahrbahn
- 9: Fahrzeugtransporter
- 10: Anlenkung des zweiten Schwenkarms am ersten Schwenkarm
- 11: Kulisse für erstes Schwenklager
- 12: Antrieb des Schwenkmechanismus
- 13: Fahrgestell des Fahrzeugtransporters
- 14: Exzenter
- 15: erste Welle zur Lagerung der zweiten Schwenkarme
- 16: schwenkbarer Teleskoparm
- 17: Antrieb für schwenkbaren Teleskoparm
- 18: Exzenter
- 19: zweite Welle zur Lagerung der schwenkbaren Teleskoparme
- 20: Loslager
- 21: Antrieb des ersten Schwenkarms

- d: Abstand zwischen dem ersten Schwenklager und dem zweiten Schwenklager
- d₁: erster Wert des Abstands zwischen dem ersten Schwenklager und dem zweiten Schwenklager
- d₂: zweiter Wert des Abstands zwischen dem ersten Schwenklager und dem zweiten Schwenklager

## Patentansprüche

1. Hebevorrichtung für eine Fahrbahn (8) eines Fahrzeugtransporters (9), mit zumindest einem an einem ersten Schwenklager (1) schwenkbar gelagerten ersten Schwenkarm (2), an welchem ein zweiter Schwenkarm (3) schwenkbar angelenkt ist, wobei der zweite Schwenkarm (3) über ein zweites Schwenklager (4) schwenkbar gelagert ist, wobei ein Abstand (d) zwischen dem ersten Schwenklager (1) des ersten Schwenkarms (2) und dem zweiten Schwenklager (4) des zweiten Schwenkarms (3) durch ein Verschwenken des zweiten Schwenkarms (3) veränderbar ist und wobei am oder im ersten Schwenkarm (2) zumindest ein Ausleger (5) teleskopisch gelagert ist, an welchem die Fahrbahn (8) bevorzugt über ein Gelenk befestigbar ist, wobei ein Verstellmechanismus zum Ein- und Ausfahren des zumindest einen Auslegers (5) vorgesehen ist, **dadurch gekennzeichnet, dass** der Verstellmechanismus für den zumindest einen Ausleger (5) in Form eines mit dem ersten Schwenkarm (2) verbundenen, unabhängig von einer Schwenkstellung des ersten Schwenkarms (2) betätigbaren Linearaktuators (6) ausgebildet ist.

2. Hebevorrichtung nach Anspruch 1, wobei ein Schwenkmechanismus zum Verschwenken des zweiten Schwenkarms (3) vorgesehen ist.

3. Hebevorrichtung nach dem vorangehenden Anspruch, wobei eine Steuer- oder Regelvorrichtung zum Steuern oder Regeln des Verstellmechanismus und des Schwenkmechanismus vorgesehen ist, wobei die Steuer- oder Regelvorrichtung dazu ausgebildet ist, ausgehend von einer Schwenkstellung des zweiten Schwenkarms (3), in welcher der Abstand (d) zwischen dem ersten Schwenklager (1) des zumindest einen ersten Schwenkarms (2) und dem zweiten Schwenklager (4) des zweiten Schwenkarms (3) einen ersten Wert (d1) aufweist, zuerst den Schwenkmechanismus zu betätigen, bis ein vorgegebener zweiter Wert (d2) erreicht ist, welcher kleiner als der erste Wert (d1) ist und erst dann, ohne weitere Betätigung des Schwenkmechanismus den Verstellmechanismus zu betätigen, um den Ausleger (5) relativ zum ersten Schwenkarm (2) mittels des Linearaktuators (6) auszufahren.

4. Hebevorrichtung nach einem der vorangehenden Ansprüche, wobei der Linearaktuator (6) an einer Außenseite des zumindest einen ersten Schwenkarms (2) angeordnet ist.

5. Hebevorrichtung nach wenigstens einem der vorangehenden Ansprüche, wobei der Linearaktuator (6) in Form einer Kolben-Zylinder-Einheit, eines Zahnstangenantriebs, eines Kettenantriebs oder eines Spindeltriebs ausgebildet ist.

6. Hebevorrichtung nach wenigstens einem der vorangehenden Ansprüche, wobei der Ausleger (5) eine konkave Ausnehmung oder Form aufweist, in welche der Linearaktuator (6) mit einem Ende hineinragt.

7. Hebevorrichtung nach wenigstens einem der vorangehenden Ansprüche, wobei der Ausleger (5) über einen Zwischenhebel (7) mit der Fahrbahn (8) verbindbar ist.

8. Hebevorrichtung nach dem vorangehenden Anspruch, wobei der Zwischenhebel (7) eine konkave Ausnehmung oder Form aufweist, in welche der Linearaktuator (6) mit einem Ende hineinragt.

9. Hebevorrichtung nach wenigstens einem der vorangehenden Ansprüche, wobei die Hebevorrichtung zumindest einen schwenkbaren Teleskoparm (16) zum Anheben der Fahrbahn (8) an einem weiteren Ende aufweist.

10. Hebevorrichtung nach wenigstens einem der Ansprüche 3 bis 8 und dem vorangehenden Anspruch, wobei die die Steuer- oder Regelvorrichtung dazu ausgebildet ist, den zumindest einen schwenkbaren Teleskoparm (16) gleichzeitig mit dem Ausleger (5) auszufahren.

11. Fahrzeugtransporter (9) mit wenigstens einer Hebevorrichtung nach wenigstens einem der vorangehenden Ansprüche.

12. Fahrzeugtransporter (9) nach dem vorangehenden Anspruch, wobei an beiden Seiten des Fahrzeugtransporters (9) wenigstens eine Hebevorrichtung nach wenigstens einem der Ansprüche 1 bis 10 angeordnet ist.

## Claims

1. A lifting apparatus for a deck (8) of a vehicle transporter (9) comprising at least one first pivot arm (2) which is mounted pivotably at a first pivot mounting (1) and to which a second pivot arm (3) is pivotably connected, wherein the second pivot arm (3) is mounted pivotably by way of a second pivot mounting (4), wherein a spacing (d) between the first pivot mounting (1) of the first pivot arm (2) and the second pivot mounting (4) of the second pivot arm (3) is variable by a pivotal movement of the second pivot arm (3) and wherein at least one boom (5) is telescopically mounted at or in the first pivot arm (2), to which boom the deck (8) can be fixed preferably by way of a joint, wherein there is provided an adjusting mechanism for retracting and extending the at least one boom (5), **characterised in that** the adjusting mechanism for the at least one boom (5) is in the form of a linear actuator (6) which is connected to the first pivot arm (2) and which is actuable independently of a pivotal position of the first pivot arm (2).

2. A lifting apparatus according to claim 1 wherein there is provided a pivot mechanism for pivoting the second pivot arm (3).

3. A lifting apparatus according to the preceding claim wherein there is provided an open-loop or closed-loop control device for open-loop or closed-loop control of the adjusting mechanism and the pivot mechanism, wherein the open-loop or closed-loop control device is adapted starting from a pivot position of the second pivot arm (3) in which the spacing (d) between the first pivot mounting (1) of the at least one first pivot arm (2) and the second pivot mounting (4) of the second pivot arm (3) is of a first value (d1), first to actuate the pivot mechanism until a predetermined second value (d2) is reached, which is less than the first value (d1), and only then without further actuation of the pivot mechanism to actuate the adjusting mechanism to extend the boom (5) relative to the first pivot arm (2) by means of the linear actuator (6).

4. A lifting apparatus according to one of the preceding claims wherein the linear actuator (6) is arranged at an outside of the at least one first pivot arm (2).

5. A lifting apparatus according to at least one of the preceding claims wherein the linear actuator (6) is in the form of a piston-cylinder unit, a toothed rack drive, a chain drive or a spindle drive.

6. A lifting apparatus according to at least one of the preceding claims wherein the boom (5) has a concave recess or shape into which the linear actuator (6) projects with an end.

7. A lifting apparatus according to at least one of the preceding claims wherein the boom (5) can be connected to the deck (8) by way of an intermediate lever (7).

8. A lifting apparatus according to the preceding claim wherein the intermediate lever (7) has a concave recess or shape into which the linear actuator (6) projects with an end.

9. A lifting apparatus according to at least one of the preceding claims wherein the lifting apparatus has at least one pivotable telescopic arm (16) for lifting the deck (8) at a further end.

10. A lifting apparatus according to at least one of claims 3 to 8 and the preceding claim wherein the open-loop or closed-loop control device is adapted to extend the at least one pivotable telescopic arm (16) simultaneously with the boom (5).

11. A vehicle transporter (9) comprising at least one lifting apparatus according to at least one of the preceding claims.

12. A vehicle transporter (9) according to the preceding claim wherein arranged at both sides of the vehicle transporter (9) is at least one lifting apparatus according to at least one of claims 1 to 10.

## Revendications

1. Dispositif de levage pour une voie de roulement (8) d'un porte-véhicules (9), avec au moins un premier bras pivotant (2) logé de façon pivotante à un premier palier d'articulation (1), auquel est articulé de façon pivotante un deuxième bras pivotant (3), dans lequel le deuxième bras pivotant (3) est logé d'une manière pivotante par un deuxième palier d'articulation (4), dans lequel un écartement (d) entre le premier palier d'articulation (1) du premier bras pivotant (2) et le deuxième palier d'articulation (4) du deuxième bras pivotant (3) peut être modifié par un pivotement du deuxième bras pivotant (3) et dans lequel une flèche (5) est logée d'une manière télescopique sur ou dans le premier bras pivotant (2), auquel la voie de roulement (8) peut être fixée de préférence par une articulation, dans lequel est prévu un mécanisme de réglage pour rentrer et déployer la au moins une flèche (5), **caractérisé en ce que** le mécanisme de réglage est conçu pour la au moins une flèche (5) en forme d'actionneur linéaire (6) relié au premier bras pivotant (2), pouvant être actionné indépendamment d'une position de pivotement du premier bras pivotant (2).

2. Dispositif de levage selon la revendication 1, dans lequel un mécanisme de pivotement est prévu pour pivoter le deuxième bras pivotant (3).

3. Dispositif de levage selon la revendication précédente, dans lequel un dispositif de commande ou de réglage est prévu pour commander ou régler le mécanisme de réglage et le mécanisme de pivotement, dans lequel le dispositif de commande ou de réglage est conçu pour actionner d'abord le mécanisme de pivotement, à partir d'une position de pivotement du deuxième bras pivotant (3), dans laquelle l'écartement (d) entre le premier palier d'articulation (1) du au moins un premier bras pivotant (2) et le deuxième palier d'articulation (4) du deuxième bras pivotant (3) présente une première valeur (d1), jusqu'à ce qu'une deuxième valeur prédéfinie (d2) soit atteinte, laquelle est inférieure à la première valeur (d1) et seulement après, pour actionner le mécanisme de réglage sans autre actionnement du mécanisme de pivotement, afin de déployer la flèche (5) par rapport au premier bras pivotant (2) au moyen de l'actionneur linéaire (6).

4. Dispositif de levage selon l'une des revendications précédentes, dans lequel l'actionneur linéaire (6) est disposé sur un côté externe du au moins un premier bras pivotant (2).

5. Dispositif de levage selon au moins l'une des revendications précédentes, dans lequel l'actionneur linéaire (6) est conçu en forme d'unité piston-cylindre, d'entraînement à crémaillère, d'entraînement par chaînes ou d'actionneur à vérin à vis.

6. Dispositif de levage selon au moins l'une des revendications précédentes, dans lequel la flèche (5) présente une forme ou un évidement concave, dans lequel l'actionneur linéaire (6) pénètre par une extrémité.

7. Dispositif de levage selon au moins l'une des revendications précédentes, dans lequel la flèche (5) peut être reliée à la voie de roulement (8) par un levier intermédiaire (7).

8. Dispositif de levage selon la revendication précédente, dans lequel le levier intermédiaire (7) présente une forme ou un évidement concave, dans lequel l'actionneur linéaire (6) pénètre par une extrémité.

9. Dispositif de levage selon au moins l'une des revendications précédentes, dans lequel le dispositif de levage présente au moins un bras télescopique pivotant (16) pour soulever la voie de roulement (8) à une autre extrémité.

10. Dispositif de levage selon au moins l'une des revendications 3 à 8 et la revendication précédente, dans lequel le dispositif de commande ou de réglage est conçu pour déployer le au moins un bras télescopique pivotant (16) simultanément à la flèche (5).

11. Porte-véhicules (9) avec au moins un dispositif de levage selon au moins l'une des revendications précédentes.

12. Porte-véhicules (9) selon la revendication précédente, dans lequel sur les deux côtés du porte-véhicules (9) est disposé au moins un dispositif de levage selon au moins l'une des revendications 1 à 10.
